Europäisches Patentamt

European Patent Office

Office européen des brevets

(19)

(11) Publication number: **0 059 429**

**A1**

# (12) EUROPEAN PATENT APPLICATION

(21) Application number: 82101411.5

(22) Date of filing: 24.02.82

(51) Int. Cl.³: **G 11 B 23/02**

(30) Priority: 02.03.81 JP 28811/81

(43) Date of publication of application:
08.09.82 Bulletin 82/36

(84) Designated Contracting States:
CH DE FR GB LI NL

(71) Applicant: OLYMPUS OPTICAL CO., LTD.
43-2, 2-chome, Hatagaya Shibuya-ku
Tokyo(JP)

(72) Inventor: Shirako, Hideo
146 Olympus-kyodo-jutaku 7-14-11
Owada-machi Hachioji-shi Tokyo(JP)

(74) Representative: KUHNEN & WACKER
Patentanwaltsbüro
Schneggstrasse 3-5 Postfach 1729
D-8050 Freising(DE)

(54) Tape cassette storage box coupling accessory.

(57) A tape cassette storage box coupling accessory to be coupled with a tape cassette storage box (20) which includes a storage box body (24) for detachably holding a tape cassette (22), a cover (30) coupled to the body (24) so as to be able to move between a first position where the cover (30), in conjunction with the body (24), stores the cassette (22) held in the body (24) and a second position where the cassette (22) is allowed to be removed from the body (24), a first coupling clicks (16) disposed on one (26) of two parallel lateral surfaces (26, 28) of the body (24), and a second coupling clicks (18) disposed on the other (28) of the two lateral surfaces (26, 28), comprises a first lateral surface (12) provided with the first coupling clicks (16), and a second lateral surface (14) substantially parallel to the first lateral surface (12) and provided with the second coupling clicks (16). In the coupling accessory the distance between the first and second lateral surfaces (12, 14) is so set that the distance from the one lateral surface (26) of a first tape cassette storage box (20) to the other lateral surface (28) of a second tape cassette storage box (20) is substantially equal to the longitudinal length of another tape cassette storage box for detachably holding another tape cassette greater in dimensions than the tape cassette (22) when the second coupling clicks (18) on the other lateral surface (28) of the first storage box (20) and the first coupling clicks (16) on the one lateral surface (26) of the second storage box (20) are coupled to the first coupling clicks (16) on the first lateral surface (12) and the second coupling clicks (18) on the second lateral surface (14), respectively.

./...

EP 0 059 429 A1

F I G. 3

- 1 -

## Tape cassette storage box coupling accessory

This invention relates to an accessory for coupling a plurality of tape cassette storage boxes for storing cassettes.

Basically, a prior art tape cassette storage box is provided with a storage box body for detachably holding a tape cassette, and a cover coupled to the storage box body so as to be able to rotate between first and second positions. When located in the first position, the cover, in conjunction with the storage box body, stores the tape cassette held in the storage box body. When located in the second position, on the other hand, the cover allows the tape cassette to be removed from the storage box body.

Also, there are conventionally known a wide variety of tape cassette storage boxes which are provided with various other components than the basic component consisting of the storage box body and cover. In one such conventional tape cassette storage box, a first coupling means is provided on one of those two lateral surfaces of the storage box body which intersect the rotation axis of the cover, and a second coupling means is provided on the other lateral surface. If you have two such tape cassette storage boxes, you may couple the first coupling means of one to the second coupling means of the other.

If two types of tape cassette storage boxes of different dimensions are simultaneously displayed for sale in a shop or in a shopwindow, smaller one will be less attractive to customer's eye than bulkier one will be. Without customer's attention, tape cassette storage boxes, and hence tape cassettes therein, will possibly miss an opportunity to be sold.

This invention is contrived in consideration of these circumstances, and is intended to provide a tape cassette storage box coupling accessory for easier carrying and storage, capable of giving tape cassette storage boxes of smaller dimensions, and hence tape cassettes stored therein, equal opportunity to be sold, as compared with ones of greater dimensions among a plurality of types of tape cassette storage boxes of different dimensions simultaneously displayed for sale in a shop or in a shopwindow.

This invention can be more fully understood from the following detailed description when taken in conjunction with the accompanying drawings, in which:

Fig. 1 is a perspective view showing a first lateral surface of a tape cassette storage box coupling accessory according to an embodiment of this invention;

Fig. 2 is a side view showing a second lateral surface of the tape cassette storage box coupling accessory of Fig. 1;

Fig. 3 is a perspective view showing a state imediately before two tape cassette storage boxes are coupled to the tape cassette storage box coupling accessory of Fig. 1;

Fig. 4 is a perspective view showing a state in which the two tape cassette storage boxes are coupled to the tape cassette storage box coupling accessory of Fig. 1; and

Fig. 5 is a perspective view of a tape cassette storage box for storing a tape cassette greater in dimensions than a tape cassette shown in Fig. 3.

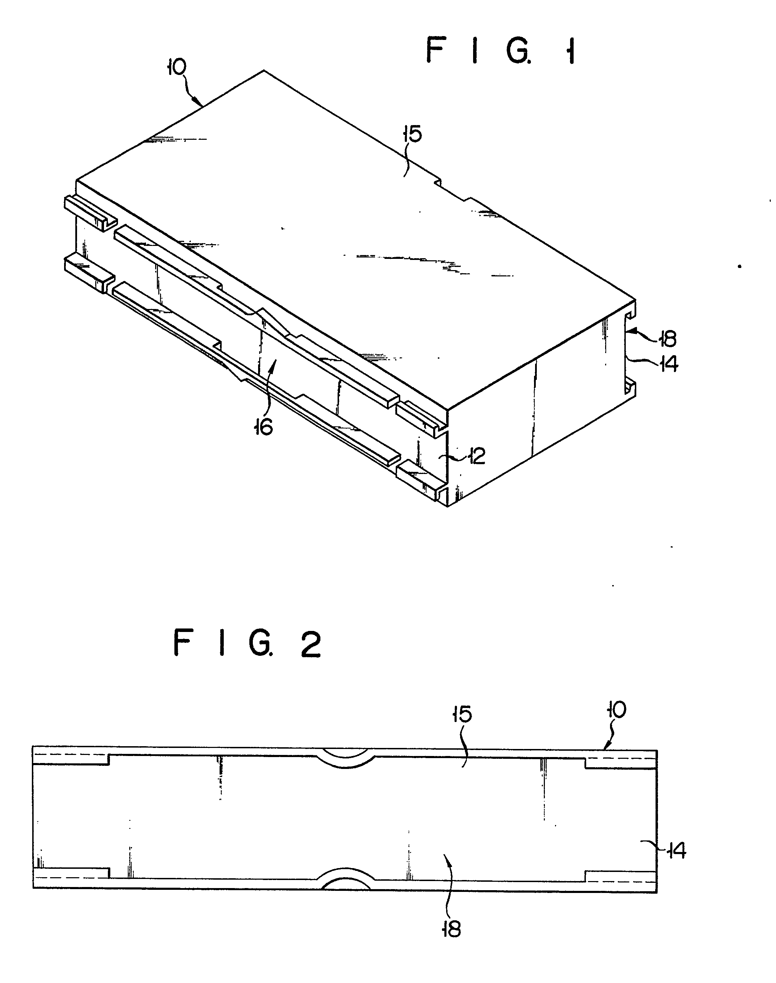

Referring now to the drawing of Fig. 1, there is shown a tape cassette storage box coupling accessory (hereinafter referred to simply as accessory) 10. The accessory 10 includes an accessory body 15 which has a first lateral surface 12 and a second lateral surface 14 parallel to the first lateral surface 12.

A first coupling means 16 is provided on the first lateral surface 12, while a second coupling means 18 is mounted on the second lateral surface 14, as shown expressly in detail in Fig. 2.

In this embodiment, the accessory body 15 and the first and second coupling means 16 and 18 are integrally formed out of plastics with elasticity.

In this embodiment, moreover, the accessory body 15 is in the shape of a rectangular prism, so that the first and second lateral surfaces 12 and 14 have the same shape and dimensions.

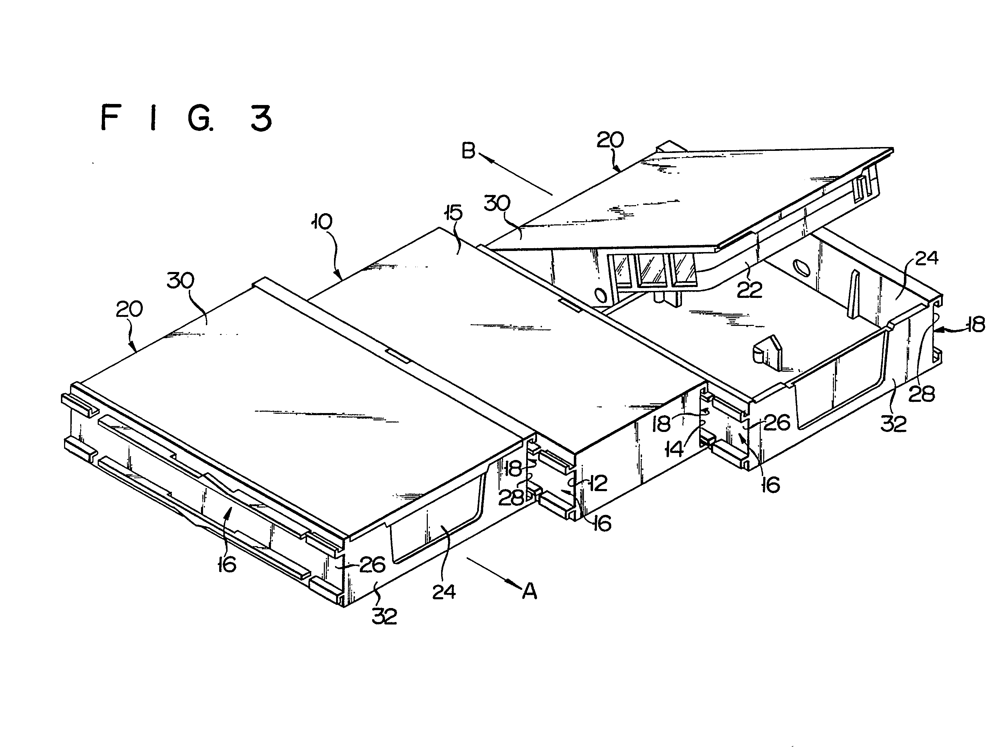

Fig. 3 shows two tape cassette storage boxes 20 of the same construction.

Each of the two tape cassette storage boxes 20 has a storage box body 24 for detachably holding a tape cassette 22. The storage box body 24 has two lateral surfaces 26 and 28 in the same shape and of the same dimensions arranged parallel to each other. A first coupling means 16 is mounted on the one lateral surface 26, while a second coupling means 18 is mounted on the other lateral surface 28.

In this embodiment, the tape cassette 22 is a micro cassette, and the shape and dimensions of the two lateral surfaces 26 and 28 are the same as those of the first and second lateral surfaces 12 and 14 of the accessory body 12.

The tape cassette storage box 20 further includes a cover 30. The cover 30 is coupled to the storage box body 24 so as to be able to move between a first position where it, in conjunction with the storage box body 24, stores the tape cassette 22 detachably held in the storage box body 24, and a second position where the tape cassette 22 is allowed to be removed from the storage box body 24.

In Fig. 3, the cover 30 of the left-hand tape cassette storage box 20 is located in its first position, while that of the right-hand tape cassette storage box 20 is located in its second position.

In coupling the second coupling means 18 of one of the two tape cassette storage boxes and the first coupling means 16 of the other to the first coupling means 16 on the first lateral surface 12 of the accessory body 15 and the second coupling means 18 on the second lateral surface 14, respectively, the other lateral surface 28 of the one tape cassette storage box 20 and the one lateral surface 26 of the other tape cassette storage box 20 are first opposed to the first and second lateral surfaces 12 and 14 of the accessory body 15, respectively, as shown in Fig. 3. Then, the two tape cassette storage boxes 20 are moved severally along the first and second lateral surfaces 12 and 14 of the accessory body 15 in the directions of arrows A and B of Fig. 3, respectively.

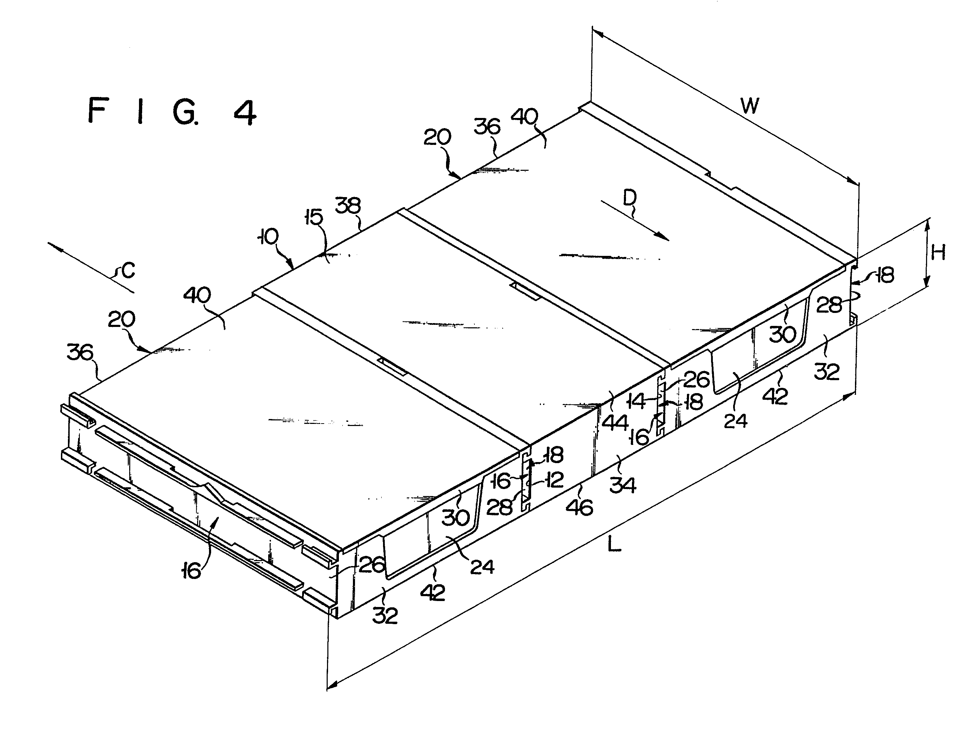

When the respective front end faces 32 of the left- and right-hand tape cassette storage boxes 20 are located flush with the front end face 34 of the accessory body 15, as shown in Fig. 4, the coupling between the first coupling means 16 of the accessory 10 and the second coupling means 18 of the left-hand tape cassette storage box 20 and between the second coupling means 18 of the accessory 10 and the first coupling means 16 of the right-hand tape cassette storage box 20 is completed.

Hereupon, as shown in Fig. 4, the respective rear end faces 36 of the left- and right-hand tape cassette storage boxes 20 are located flush with the rear end face 38 of the accessory body 15. Moreover, the upper and lower surfaces 40 and 42 of the left-hand tape cassette storage box 20, as well as of the right-hand tape cassette storage box 20, are located flush with the upper and lower surfaces 44 and 46 of the accessory body 15, respectively.

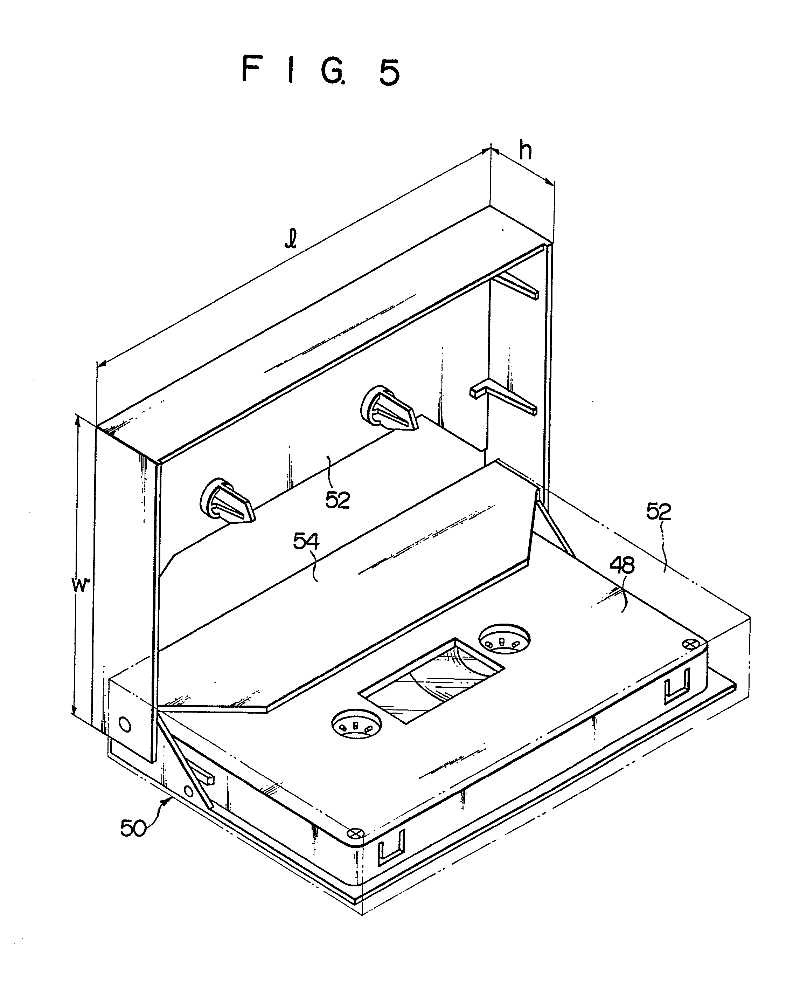

The length L between the one lateral surface 26 of the left-hand tape cassette storage box 20 (the projected end of the first coupling means 16 in this embodiment) and the other lateral surface 28 of the right-hand tape cassette storage box 20 coupled to the accessory 10 (the projected end of the second coupling means 18 in this embodiment) is approximately 109 mm. The length L is substantially equal to the longitudinal length "$\ell$" of a conventional tape cassette storage box 50 for detachably holding a tape cassette 48, as shown in Fig. 5.

The tape cassete 48 shown in Fig. 5 is greater in dimensions than the tape cassette 22 shown in Fig. 3.

In this embodiment, the tape cassette 48 is what is called a compact tape cassette developed by N.V. Philips' Gloeilampenfabrieken of the Netherlands.

Further, the distance W from the front end face 32 to the rear end face 36 of the tape cassette storage box 20 shown in Fig. 4, i.e., the distance from the front end face 34 to the rear end face 38 of the accessory body 15, is smaller than the length "w" of the tape cassette storage box 50 of Fig. 5 along the direction substantially at right angles to the longitudinal direction.

In Fig. 5, a cover 52 of the tape cassette storage box 50 is located in its second position where the tape cassette 48 detachably held in a main body of the storage box 50 is allowed to be removed from the main body 54. If the cover 52 is located in its first position as represented by two-dot chain line in Fig. 5, however, it will, in conjunction with the main body 54, store the tape cassette 48 detachably held in the main body 54.

Furthermore, the distance H between the upper and lower surfaces 40 and 42 of the tape cassette storage box 20 shown in Fig. 4, i.e., the distance between the upper and lower surfaces 44 and 46 of the accessory body 15, is smaller than the height "h" of the tape cassette storage box 50 shown in Fig. 5.

Accordingly, the accessory 10 and the two tape cassette storage boxes 20 coupled thereto, as shown in Fig. 4, can be carried, stored, and displayed by the use of a commercially available tape cassette storage rack capable of storing a plurality of the tape cassette storage boxes 50 shown in Fig. 5.

The two tape cassette storage boxes 20 coupled to the accessory 10 as shown in Fig. 4 can be disengaged from the accessory 10, as shown in Fig. 3, by moving the two tape cassette storage boxes 20 along the first and second lateral surfaces 12 and 14 of the accessory body 15 in the directions of arrows C and D of Fig. 4 or in the opposite directions thereto, severally.

According to an embodiment of this invention, there is provided a tape cassette storage box coupling accessory to be coupled with a tape cassette storage box which includes a storage box body for detachably holding a tape cassette, a cover coupled to the storage box body so as to be able to move between a first position where the cover, in conjunction with the storage box body, stores the tape cassette held in the storage box body and a second position where the tape cassette is allowed to be removed from the storage box body, a first coupling means disposed on one of two parallel lateral surfaces of the storage box body, and a second coupling means disposed on the other of the two lateral surfaces, comprising a first lateral surface provided with the first coupling means, and a second lateral surface substantially parallel to the first lateral surface and provided with the second coupling means, characterized in that the distance between the first and second lateral surfaces is so set that the distance from the one lateral surface of a first tape cassette storage box to the other lateral surface of a second tape cassette storage box is substantially equal to the longitudinal length of another tape cassette storage box for detachably holding another tape cassette greater in dimensions than the aforesaid tape cassette when the second coupling means on the other lateral surface of the first tape cassette storage box and the first coupling means on the one lateral surface of the second tape cassette storage box are coupled to the first coupling means on the first lateral surface and the second coupling means on the second lateral surface, respectively.

With such an arrangement, the tape cassette storage boxes can be carried and stored with ease, and tape cassette storage boxes of smaller dimensions, and hence tape cassettes stored therein, can enjoy equal opportunity to be sold, as compared with ones of greater dimensions among a plurality of types of tape cassette storage boxes of different dimensions simultaneously displayed for sale in a shop or in a shopwindow.

More specifically, according to this invention, there may be provided a tape cassette storage box coupling accessory to be coupled with a tape cassette storage box for micro cassette which includes a storage box body for detachably holding a micro cassette, a cover coupled to the storage box body so as to be able to move between a first position where the cover, in conjunction with the storage box body, stores the micro cassette held in the storage box body and a second position where the micro cassette is allowed to be removed from the storage box body, a first coupling means disposed on one of two parallel lateral surfaces of the storage box body, and a second coupling means disposed on the other of the two lateral surfaces, comprising a first lateral surface provided with the first coupling means, and a second lateral surface substantially parallel to the first lateral surface and provided with the second coupling means, characterized in that the distance between the first and second lateral surfaces is so set that the distance from the one lateral surface of a first tape cassette storage box to the other lateral surface of a second tape cassette storage box is substantially equal to the longitudinal length of another tape cassette storage box for detachably holding a compact cassette when the second coupling means on the other lateral surface of the first tape cassette storage box and the first coupling means on the one lateral surface of the second tape cassette storage box are coupled to the first coupling means on the first lateral surface and the second coupling means on the second lateral surface, respectively.

Although an illustrative embodiment of this invention has been described in detail herein, it is to be understood that the invention is not limited to that precise embodiment, and that various changes and modifications may be effected therein by one skilled in the art without departing from the scope or spirit of the invention.

For example, the tape cassette 22 stored in the tape cassette storage box 20 shown in Fig. 3 and the tape cassette 48 stored in the storage box 50 shown in Fig. 5 may be a compact tape cassette and a video tape cassette, respectively.

Further, the first and/or second coupling means 16 and/or 18 may be provided on the upper surface 44 and/or lower surface 46 of the accessory body 15.

Furthermore, the upper surface 44 and/or lower surface 46 of the accessory body 10 may be provided with a recess or recesses to hold the tape cassette 22 in an upright position.

With such an arrangement, the tape cassette 22 may be displayed in varied modes in a shop or in a shopwindow.

Claims:

1. A tape cassette storage box coupling accessory to be coupled with a tape cassette storage box (20) which includes a storage box body (24) for detachably holding a tape cassette (22), a cover (30) coupled to the storage box body (24) so as to be able to move between a first position where the cover (30), in conjunction with the storage box body (24), stores the tape cassette held in the storage box body (24) and a second position where the tape cassette (22) is allowed to be removed from the storage box body (24), a first coupling means (16) disposed on one (26) of two parallel lateral surfaces (26, 28) of the storage box body (24), and a second coupling means (18) disposed on the other (28) of the two lateral surfaces (26, 28), comprising:

a first lateral surface (12) provided with the first coupling means (16); and

a second lateral surface (14) substantially parallel to said first lateral surface (12) and provided with the second coupling means (16),

the improvement in which the distance between said first and second lateral surfaces (12, 14) is so set that the distance from the one lateral surface (26) of a first tape cassette storage box (20) to the other lateral surface (28) of a second tape cassette storage box (20) is substantially equal to the longitudinal length of another tape cassette storage box (50) for detachably holding another tape cassette (48) greater in dimensions than said tape cassette (22) when the second coupling means (18) on the other lateral surface (28) of the first tape cassette storage box (20) and the first coupling means (16) on the one lateral surface (26) of the second tape cassette storage box (20) are coupled to the first coupling means (16) on said first lateral surface (12) and the second coupling means (18) on said second lateral surface (14), respectively.

2. A tape cassette storage box coupling accessory to be coupled with a tape cassette storage box (20) for micro cassette which includes a storage box body (24) for detachably holding a micro cassette (22), a cover (30) coupled to the storage box body (24) so as to be able to move between a first position where the cover (30), in conjunction with the storage box body (24), stores the micro cassette (22) held in the storage box body (24) and a second position where the micro cassette (22) is allowed to be removed from the storage box body, a first coupling means (16) disposed on one (26) of two parallel lateral surfaces (26, 28) of the storage box body (24), and a second coupling means (18) disposed on the other (28) of the two lateral surfaces (26, 28), comprising:

a first lateral surface (12) provided with the first coupling means (16); and

a second lateral surface (14) substantially parallel to said first lateral surface (12) and provided with the second coupling means (16),.

the improvement in which the distance between said first and second lateral surfaces (12, 14) is so set that the distance from the one lateral surface (26) of a first tape cassette storage box (20) to the other lateral surface (28) of a second tape cassette storage box (20) is substantially equal to the longitudinal length of another tape cassette storage box (50) for detachably holding a compact cassette (22) when the second coupling means (18) on the other lateral surface (28) of the first tape cassette storage box (20) and the first coupling means (16) on the one lateral surface (26) of the second tape cassette storage box (20) are coupled to the first coupling means (16) on said first lateral surface (12) and the second coupling means (18) on said second lateral surface (14), respectively.

−1/4−

# F I G. 1

# F I G. 2

# F I G. 3

FIG. 4

# F I G. 5

## DOCUMENTS CONSIDERED TO BE RELEVANT

| Category | Citation of document with indication, where appropriate, of relevant passages | Relevant to claim |
|---|---|---|
| A | DE - U - 7 245 588 (BREMSHEY GMBH) <br> * claims 1, 3; fig. 7 * | 1,2 |
| A | US - A - 4 026 615 (SONY CORP.) <br> * column 1, lines 27 to 39; fig. 1, 2 * | 1,2 |
| A | CH - A5 - 562 497 (IDN INVENTIONS AND DEVELOPMENT OF NOVELTIES AG) <br> * column 1, lines 29 to 44; fig. 1 * | |

**CLASSIFICATION OF THE APPLICATION (Int. Cl. 3)**

G 11 B 23/02

**TECHNICAL FIELDS SEARCHED (Int.Cl. 3)**

B 65 D 85/00

G 11 B 23/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| Berlin | 26-05-1982 | LEITHÄUSER |

EPO Form 1503.1   06.78